# EUROPEAN PATENT SPECIFICATION

(11) **EP 2 759 487 B1**
(45) Date of publication and mention of the grant of the patent: **13.03.2019**
(21) Application number: 12833727.6
(22) Date of filing: 11.09.2012
(51) Int. Cl.: B32B 25/08, B65D 65/40, B65D 30/08, B32B 27/32, B32B 27/28, B32B 27/34, B32B 27/36, B32B 27/08

(54) **PACKAGING CONTAINER**
VERPACKUNGSBEHÄLTER
RÉCIPIENT D'EMBALLAGE

(30) Priority: 20.09.2011 KR 20110094634
(43) Date of publication of application: 30.07.2014
(73) Proprietor: CJ Cheiljedang Corporation, Jung-gu Seoul 100-400 (KR)
(72) Inventor: PARK, Eun Jin, Seoul 121-100 (KR); YOU, Youn Tae, Seoul 138-910 (KR); CHA, Gu Hoan, Seoul 136-032 (KR)
(74) Representative: Mounteney, Simon James
(86) International application number: PCT/KR2012/007272
(87) International publication number: WO 2013/042892

(56) References cited:
- JP-A- H09 221 150
- JP-A- H09 267 868
- JP-A- H09 267 868
- JP-A- 2003 054 650
- JP-A- 2004 090 370
- JP-A- 2004 090 370
- JP-A- 2008 080 509
- JP-A- 2008 080 509
- JP-A- 2008 273 530
- KR-U- 980 059 716
- US-A- 4 288 488
- US-A1- 2002 160 129

## Description

### [Technical Field]

The present invention relates to a packaging container, and more particularly, to a packaging container capable of preventing reliability from deteriorating during storage of contents in a refrigerator or a freezer or heating of the packaging container together with contents packaged inside thereof.

### [Background Art]

According to a change in a pattern of dietary life, a lot of first processed products are packaged and distributed on the market in refrigerated or frozen states in order to promote convenience of customers. A user may easily eat by heating the packaged product with cooking equipment, such as a microwave.

In the meantime, a packaging container becomes hard during a process of storing the packaged product in a refrigerator or a freezer, so that the packaging container is damaged from an external impact, thereby degrading a packaging quality, and in a case where the product and a packaging material are heated together in a state where the product is packaged, there may occur a problem in that the packaging material may be damaged or melt by heat.

JP2008080509 discloses a sealant film comprising a first layer and a third layer made of low density polyethylene resin and a second layer, which is positioned between the first and third layers, made of low melting point polypropylene and a rubber component. US20020160129 discloses a multilayer film including an outer layer comprising a polymer including mer units derived from propylene.

US4288488 discloses a laminated packaging material having high impermeability to gases and high workability.

JP H09 221150 discloses a retort pouch for housing separate contents, comprising sealing portions at the outer edge of a heat-sealing film and temporary sticking portion for defining two chambers in said pouch. Said heat-sealing film is made from a bi- or trilayered structure comprising in the following order a heat-resistant base film, an optional gas barrier film and a sealing film made of a cast polypropylene film or cast ethylene-propylene copolymer film, further comprising an olefin -based rubber component.

### [Technical Solution]

An object of the present invention is to provide a packaging container capable of preventing reliability from deteriorating during storage of contents in a refrigerator or
a freezer or heating of the packaging container together with contents packaged inside thereof.

In order to achieve the object of the present invention, a packaging container heated together with contents accommodated inside therein includes: a first cover part having a packaging area and a sealing area surrounding the packaging area; and a second cover part facing the first cover part and coupled to the first cover part in the sealing area.

Further, each of the first cover part and the second cover part includes: a base layer, a first auxiliary layer formed on the base layer, and a second auxiliary layer formed on the base layer so as face the first auxiliary layer with the base layer interposed therebetween.

The base layer comprises a Casted Polypropylene (CPP) film, the first auxiliary layer comprises a CPP film including Epoxidised Butadiene Rubber (EBR), and the second auxiliary layer includes the same material as that of the first auxiliary layer.

### [Advantageous Effects]

According to the present invention, the packaging container includes the base layer and the auxiliary layers formed with the base layer interposed therebetween, so that it is possible to prevent the packaging container from becoming hard and being damaged from an external impact during a process of storing the packaging container in a freezer/refrigerator, and prevent the packaging container from being melt or damaged during a process of heating the packaging container together with a packaged product, thereby improving reliability of the packaging container.

### [Description of Drawings]

FIG. 1 is a perspective view of a packaging container according to an exemplary embodiment of the present invention.
FIG. 2 is a cross-sectional view illustrating a surface taken along line I-I' of FIG. 1.
FIG. 3 is a cross-sectional view of a packaging container according to another exemplary embodiment of the present invention.

### [Best Mode]

Hereinafter, an exemplary embodiment of the present invention will be described in detail with reference to the accompanying drawings. An object, a characteristic, and an effect of the present invention will be easily understood through the exemplary embodiment related to the accompanying drawings. However, the present invention is not limited to the exemplary embodiments described herein, and may be applied and modified in various forms. Accordingly, it shall not be construed that the claims of the present invention are limited to the exemplary embodiments described below. In the meantime, the drawings suggested together with the exemplary embodiment below are somewhat simplified or exaggerated, and like reference numerals in the drawings designate like elements.

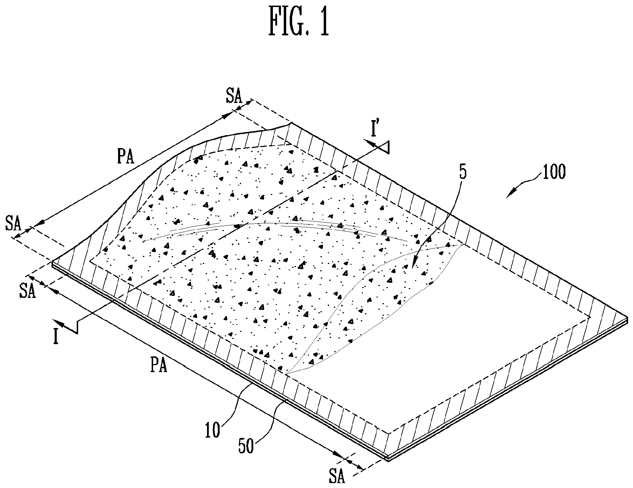

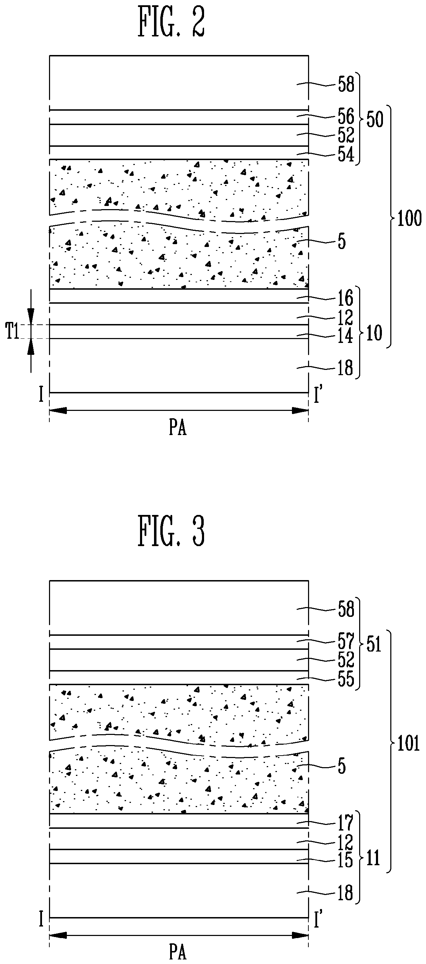

FIG. 1 is a perspective view of a packaging container according to an exemplary embodiment of the present invention, and FIG. 2 is a cross-sectional view illustrating a surface taken along line I-I' of FIG. 1.

Referring to FIGS. 1 and 2, the packaging container 100 accommodates contents 5 inside therein, and packages the contents 5 to be sealed from the outside. In the exemplary embodiment of the present invention, the packaging container 100 may be used for packaging the contents 5, such as frozen food or refrigerated food inside therein, and the packaging container 100 may be heated together with the contents 5 in order for a user to eat the contents 5. A more detailed structure of the packaging container 100 will be described below.

The container 100 includes a first cover part 10 and a second cover part 50. The first cover part 10 has a packaging area PA and a sealing area SA surrounding the packaging area PA. Further, the second cover part 50 faces the first cover part 10, and is coupled to the first cover part 10 in the sealing area SA.

In the exemplary embodiment of the present invention, the packaging area PA may be defined along a circumference of the first cover part 10, and thus the second cover part 50 is coupled to the first cover part 10 along the circumference of the first cover part 10. Further, the first and second cover parts 10 and 50 are not coupled to each other in the packaging area SA, so that it is possible to provide an accommodation space for accommodating the contents 5 between the first and second cover parts 10 and 50 so as to correspond to the packaging area SA, and the contents 5 may be accommodated in the packaging area PA and be sealed from the outside by the first and second cover parts 10 and 50 in the sealing area SA to be packaged.

In the meantime, the first cover part 10 includes a first base layer 12, a first auxiliary layer 14, a second auxiliary layer 16, and a first surface layer 18.

The first base layer 12 is a layer serving as a base of the first cover part 10, and may be formed to have a larger thickness than that of the first auxiliary layer 14 or the second auxiliary layer 16. Further, the first base layer 12 comprises a Casted Polypropylene (CPP) film.

The first auxiliary layer 14 may be formed on a lower surface of the first base layer 12, and a thickness T1 of the first auxiliary layer 14 may be about 80 µm to about 100 µm. Further, the first auxiliary layer 14 comprises a CPP film including Epoxidised Butadiene Rubber (EBR). Accordingly, the first auxiliary layer 14 is formed, thereby improving adhesive force between the first surface layer 18 and the first base layer 12, and preventing the first base layer 12 from being hard and an appearance of the first base layer 12 from being damaged from an impact during a process of storing a product in a freezer or a refrigerator.

The second auxiliary layer 16 may be formed on an upper surface of the first base layer 12, and may be formed to have the same thickness as that of the first auxiliary layer 14. Further, the second auxiliary layer 16 may include the same material as that of the first auxiliary layer 14, thereby preventing the first base layer 12 from being hard and the appearance of the first base layer 12 from being damaged from an impact when the packaging container 100 is stored in a freezer or a refrigerator.

In the meantime, in the exemplary embodiment of the present invention, the CPP film constituting the first base layer 12, the first auxiliary layer 14, and the second auxiliary layer 16 may include a block co-polymer copolymerized with olefin, and the block co-polymer may have a melt index (230 °C, 2.16 kg) of 3.0 to 3.7 in a resin state.

Further, in the exemplary embodiment of the present invention, the first base layer 12, the first auxiliary layer 14, and the second auxiliary layer 16 includes the block co-polymer as a main component, so that a melting point of each of the layers may be 160 °C to 165 °C. Accordingly, sealing strength between the first base layer 12 and the first auxiliary layer 14 and sealing strength between the first base layer 12 and the second auxiliary layer 16 may be maintained to be 3.0 kgf to 3.8 kgf based on a width of 15 mm and a length of 50 mm at about 80 °C to about 155 °C lower than the melting point. Accordingly, even though the packaging container 100 is heated together with the contents 5 accommodated inside thereof in a temperature range lower than about 155 °C, the first base layer 12, and the first and second auxiliary layers 14 and 16 may be prevented from being melt by heat, and the first and second auxiliary layers 14 and 16 may be prevented from being separated from the first base layer 12.

The first surface layer 18 is formed on the first auxiliary layer 14 so as to face the first base layer 12 with the first auxiliary layer 14 interposed therebetween. The first surface layer 18 in the first cover part 10 is a layer exposed to the outside, and information of the contents 5 may be printed on the first surface layer 18.

In the exemplary embodiment of the present invention, the first surface layer 18 may be constituted by any one of a nylon film, an Oriented Polypropylene (OPP) film, and a Polyethylene Terephtalate (PET) film.

The second cover part 50 includes a second base layer 52, a third auxiliary layer 54, a fourth auxiliary layer 56, and a second surface layer 58. In the meantime, the second cover part 50 has a structure symmetric to that of the first cover part 10 based on an internal side of the packaging container 100. More particularly, structures and functions of the second base layer 52, the third auxiliary layer 54, the fourth auxiliary layer 56, and the second surface layer 58 one-to-one correspond to the structure and the functions of the first base layer 12, the first auxiliary layer 14, the second auxiliary layer 16, and a first surface layer 18. Accordingly, descriptions of the constituent elements included in the second cover part 50 will be omitted.

FIG. 3 is a cross-sectional view of a packaging container according to another exemplary embodiment of the present invention. In the meantime, except for the first to fourth auxiliary layers 15, 17, 55, and 57, a packaging container 101 illustrated in FIG. 3 includes the same elements as those of the packaging container (100, see FIGS. 1 and 2) illustrated in FIGS. 1 and 2. Accordingly, in describing the packaging container 101, the elements described with reference to FIGS. 1 and 2 are denoted by the reference numerals, and overlapping descriptions of the elements will be omitted.

Referring to FIG. 3, the packaging container 101 includes a first cover part 11 and a second cover part 51. Further, the first cover part 11 includes a first base layer 12, a first auxiliary layer 14, a second auxiliary layer 16, and a first surface layer 18, and the second cover part 51 includes a second base layer 52, a third auxiliary layer 55, a fourth auxiliary layer 57, and a second surface layer 58.

In the exemplary embodiment of the present invention illustrated in FIG. 3, the first to fourth auxiliary layers 15, 17, 55, and 57 may have different compositions from the first to fourth auxiliary layers (reference numerals 14, 16, 54, and 56 of FIG. 2) described with reference to FIG. 2.

In the exemplary embodiment of the present invention illustrated in FIG. 3, the first to fourth auxiliary layers 15, 17, 55, and 57 may include the same material, and a material of the first auxiliary layer 15 among the first to fourth auxiliary layers 15, 17, 55, and 57 will be described below as an example.

The first auxiliary layer 15 may be implemented by a CPP film containing EBR and further containing metallocene polyethylene (m-PE). When the first auxiliary layer 15 includes further m-PE, sealing strength of the first auxiliary layer 15 may be further improved by approximately 0.5 kgf based on a width of 15 mm and a length of 50 mm. Accordingly, an effect of preventing the first auxiliary layer 15 from being hard according to an external impact or an external temperature and an appearance of the auxiliary layer 15 from being damaged may be further improved.

### [Description of Main Reference Numerals of Drawings]

| | |
|---|---|
| 5: Contents | 10: First cover part |
| 12: First base layer | 14: First auxiliary layer |
| 16: Second auxiliary layer | 18: First surface layer |
| 50: Second cover part | 52: Second base layer |
| 54: Third auxiliary layer | 56: Fourth auxiliary layer |
| 58: Second surface layer | 100: Packaging container |

## Claims

1. A packaging container heated together with contents accommodated inside therein, comprising:
a first cover part comprising a packaging area and a sealing area surrounding the packaging area; and
a second cover part facing the first cover part and coupled to the first cover part in the sealing area,
wherein each of the first cover part and the second cover part includes:
a base layer comprised of a Casted Polypropylene (CPP) film;
a first auxiliary layer comprised of a CPP film including Epoxidised Butadiene Rubber (EBR), and formed on the base layer; and
a second auxiliary layer including the same material as that of the first auxiliary layer, and formed on the base layer so as face the first auxiliary layer with the base layer interposed therebetween.

2. The packaging container of claim 1, wherein the CPP film of each of the base layer, the first auxiliary layer, and the second auxiliary layer includes a block co-polymer.

3. The packaging container of claim 1 or 2, wherein a melting point of each of the base layer, the first auxiliary layer, and the second auxiliary layer is 160 °C to 165 °C.

4. The packaging container of claim 1, wherein sealing strength between the base layer and the first auxiliary layer, and sealing strength between the base layer and the second auxiliary layer at 80 °C to 155 °C is 3.0 kgf to 3.8 kgf based on a width of 15 mm and a length of 50 mm.

5. The packaging container of claim 1, wherein the CPP film of each of the first auxiliary layer and the second auxiliary layer further includes metallocene polyethylene (m-PE).

6. The packaging container of claim 1, wherein each of the first cover part and the second cover part further includes a surface layer formed on the first auxiliary layer so as to face the base layer with the first auxiliary layer interposed therebetween, and exposed to the outside.

7. The packaging container of claim 6, wherein the surface layer is comprised of any one of a nylon film, an Oriented Polypropylene (OPP) film, and a Polyethylene Terephtalate (PET) film.

8. The packaging container of claim 1, wherein a thickness of each of the first auxiliary layer and the second auxiliary layer is 80 µm to 100 µm.

## Patentansprüche

1. Verpackungsbehälter, welcher mit in dessen Innerem untergebrachtem Inhalt erhitzt wird, welcher Folgendes beinhaltet:
ein erstes Abdeckungsteil, welches einen Verpackungsbereich und einen Siegelbereich beinhaltet, welcher den Verpackungsbereich umgreift; und
ein zweites Abdeckungsteil, welches dem ersten Abdeckungsteil zugewandt ist und mit dem ersten Abdeckungsteil im Siegelbereich gekoppelt ist,
wobei ein jedes Element der Gruppe, bestehend aus dem ersten Abdeckungsteil und dem zweiten Abdeckungsteil, Folgendes enthält:
eine Basisschicht, bestehend aus Gusspolypropylenfolie (CPP);
eine erste Hilfsschicht, bestehend aus einer CPP-Folie, welche Epoxidierten Butadien-Kautschuk (EBR) enthält und an der Basisschicht gebildet ist; und
eine zweite Hilfsschicht, welche dasselbe Material wie dasjenige der ersten Hilfsschicht enthält und an der Basisschicht gebildet ist, so dass sie der ersten Hilfsschicht mit der dazwischengeschalteten Basisschicht zugewandt ist.

2. Verpackungsbehälter nach Anspruch 1, bei welchem die CPP-Folie einer jeden Schicht der Gruppe, bestehend aus der Basisschicht, der ersten Hilfsschicht und der zweiten Hilfsschicht ein Block-Copolymer enthält.

3. Verpackungsbehälter nach Anspruch 1 oder 2, bei welchem ein Schmelzpunkt einer jeden Schicht der Gruppe, bestehend aus der Basisschicht, der ersten Hilfsschicht und der zweiten Hilfsschicht 160 °C bis 165 °C beträgt.

4. Verpackungsbehälter nach Anspruch 1, bei welchem eine Siegelkraft zwischen der Basisschicht und der ersten Hilfsschicht, und eine Siegelkraft zwischen der Basisschicht und der zweiten Hilfsschicht bei 80 °C bis 155 °C 3,0 kgf bis 3,8 kgf beträgt, basierend auf einer Breite von 15 mm und einer Länge von 50 mm.

5. Verpackungsbehälter nach Anspruch 1, bei welchem die CPP-Folie einer jeden Schicht der Gruppe, bestehend aus der ersten Hilfsschicht und der zweiten Hilfsschicht, zudem ein Metallocen-Polyethylen (m-PE) enthält.

6. Verpackungsbehälter nach Anspruch 1, bei welchem ein jedes Element der Gruppe, bestehend aus dem ersten Abdeckungsteil und dem zweiten Abdeckungsteil, zudem eine Oberflächenschicht enthält, welche an der ersten Hilfsschicht gebildet ist, so dass sie der Basisschicht mit der dazwischengeschalteten ersten Hilfsschicht zugewandt und nach außen exponiert ist.

7. Verpackungsbehälter nach Anspruch 6, bei welchem die Oberflächenschicht aus einem Element der Gruppe besteht, gebildet aus einer Nylonfolie, einer Folie aus orientiertem Polypropylen (OPP) und einer Polyethylenterephthalatfolie (PET).

8. Verpackungsbehälter nach Anspruch 1, bei welchem eine Dicke einer jeden Schicht der Gruppe, bestehend aus der ersten Hilfsschicht und der zweiten Hilfsschicht, 80 µm bis100 µm beträgt.

## Revendications

1. Récipient de conditionnement chauffé avec des contenus logés à l'intérieur de celui-ci, comprenant :
une première partie de recouvrement comprenant une zone de conditionnement et une zone de scellage entourant la zone de conditionnement, et
une seconde partie de recouvrement faisant face à la première partie de recouvrement et couplée à la première partie de recouvrement dans la zone de scellage,
dans lequel la première partie de recouvrement et la seconde partie de recouvrement incluent chacune :
une couche de base constituée d'un film de polypropylène coulé (CPP),
une première couche auxiliaire constituée d'un film de CPP incluant du caoutchouc butadiène époxydé (EBR) et formée sur la couche de base, et
une seconde couche auxiliaire incluant la même matière que celle de la première couche auxiliaire et formée sur la couche de base de manière à faire face à la première couche auxiliaire, avec la couche de base intercalée entre les deux.

2. Récipient de conditionnement selon la revendication 1, dans lequel le film de CPP de chacune de la couche de base, de la première couche auxiliaire et de la seconde couche auxiliaire inclut chacun un copolymère séquencé.

3. Récipient de conditionnement selon la revendication 1 ou 2, dans lequel un point de fusion de chacune de la couche de base, de la première couche auxiliaire et de la seconde couche auxiliaire est de 160 °C à 165 °C.

4. Récipient de conditionnement selon la revendication 1, dans lequel une force de scellage entre la couche de base et la première couche auxiliaire, et une force de scellage entre la couche de base et la seconde couche auxiliaire sont de 3,0 kgf à 3,8 kgf à une température de 80 °C à 155 °C, pour une largeur de 15 mm et une longueur de 50 mm.

5. Récipient de conditionnement selon la revendication 1, dans lequel le film de CPP de chacune de la première couche auxiliaire et de la seconde couche auxiliaire inclut du polyéthylène métallocène (m-PE).

6. Récipient de conditionnement selon la revendication 1, dans lequel chacune de la première partie de recouvrement et de la seconde partie de recouvrement comprennent en plus une couche de surface formée sur la première couche auxiliaire de façon à faire face à la couche de base, avec la première couche auxiliaire intercalée entre les deux, et exposée vers l'extérieur.

7. Récipient de conditionnement selon la revendication 6, dans lequel la couche de surface est composée d'un film de nylon, d'un film de polypropylène orienté (OPP) ou d'un film de polyéthylène téréphtalate (PET).

8. Récipient de conditionnement selon la revendication 1, dans lequel l'épaisseur de chacune de la première couche auxiliaire et de la seconde couche auxiliaire est de 80 µm à 100 µm.
